# EUROPEAN PATENT APPLICATION

(11) **EP 4 783 536 A1**
(43) Date of publication of application: **29.07.2026**
(21) Application number: 25154424.3
(22) Date of filing: 28.01.2025
(51) Int. Cl.: H04L 45/00, H04L 45/02, H04L 45/18

(54) **SYSTEM AND METHOD FOR BREAKING A PERMANENT LOOP IN A DATA COMMUNICATION NETWORK**

(71) Applicant: Huawei Technologies Co., Ltd., Shenzhen, Guangdong 518129 (CN)
(72) Inventor: MARTIN, Sébastien, 80992 Munich (DE); MAGNOUCHE, Youcef, 80992 Munich (DE); LEGUAY, Jérémie, 80992 Munich (DE); MEI, Cong, 80992 Munich (DE)
(74) Representative: Goddar, Heinz J.

(57) **Abstract**

A method of breaking a permanent loop in a multi-protocol and multi-instance data communications network **702** is provided. The multi-protocol data and multi-instance communications network handles a plurality of protocols using a respective plurality of instances of the data communications network. The method includes (i) detecting a permanent loop in data communications for a given destination between a plurality of routers **704A-N** in the multi-protocol and multi-instance data communications network, (ii) selecting a first router which is outside of the permanent loop and a second router which is inside the permanent loop, as a rerouting between these routers which will break the permanent loop, and (iii) directing data communications for the given destination from the second router to the first router.

## Description

### TECHNICAL FIELD

The disclosure relates generally to routing loops in a data communication network, and more particularly, the disclosure relates to a method of breaking a permanent loop in a multi-protocol and multi-instance data communication network. Also, the disclosure relates to a system for breaking a permanent loop in a multi-protocol and multi-instance data communication network.

### BACKGROUND

In network infrastructures, routing protocols are essential to enable smooth data flow across interconnected networks. To achieve this, networks are organized into areas and domains, each employing specific routing protocols like Open Shortest Path First, OSPF, Intermediate System to Intermediate System, ISIS, or Border Gateway Protocol, BGP. Border Routers, BRs, which serve as connection points between the routing protocols, utilize routing policies to manage the advertisement and reception of routing information. Network administrators meticulously configure the routing policies to ensure optimal end-to-end connectivity, prioritizing availability, performance, and security.

Interior Gateway Protocols, IGPs, like OSPF and ISIS, facilitate efficient data routing within a network by determining the shortest paths for traffic. The network includes one or more subnetworks. Each subnetwork is managed by one of the two protocols, that can be connected to route traffic between different instances. The BRs connect two instances and manage the routing of traffic between the two instances. Various route policies are configured for each BR to manage different connections of instances. For example, the BR can be configured with an "import" policy that facilitates routing from instance "A" to "B" at a specified cost. This means the BR with the import policy allows an Internet Protocol, IP, prefix in instance "A" to be accessible from an external instance "B". If the BR selects a route among two routes received from different instances for the same prefix, a preference can be configured between the instances. These instances, when connected, represent an Autonomous System, AS. The autonomous systems are interconnected using the BGP.

Each routing protocol requires configurations or policies to determine which "route" is preferred and to manage "routes" between areas, instances, and the AS. Since devices within the network cannot directly access information of all other devices within each area or instance, the routing strategies are merged and multiple routes are produced. Then, the BR selects an appropriate route based on the configurations or policies. These configurations are typically installed manually in the BRs, which leads to misconfigurations that can induce routing loops in the network. In some cases, some data packets may indefinitely cross the same links without reaching their intended destination.

An example of the typical configurations and policies that can be typically configured based on the Yang model is provided below:

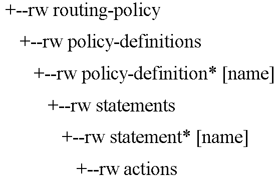

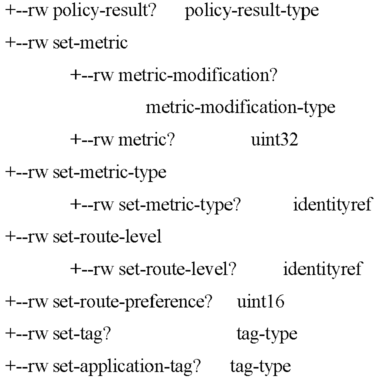

The routing loops may occur in the OSPF, the ISIS, and the BGP networks due to the complexity involved in tuning routing policy parameters, such as import costs and preferences, within multi-instance and multi-protocol environments. These issues can lead to permanent routing loops and route deletions caused by protocol misconfigurations. Manual verification is often required to trace the origin of a loop. This makes it essential to implement measures to minimize impact. Moreover, the routing loops can significantly impact network performance by causing several issues. They may lead to increased network traffic as data packets are continuously circulated within the loop, consuming network resources and reducing overall performance. This repeated circulation can also result in severe network congestion, potentially leading to a complete breakdown of the network. Additionally, the routing loops may destabilize routing protocols, disrupt their normal operation, and potentially cause them to fail altogether.

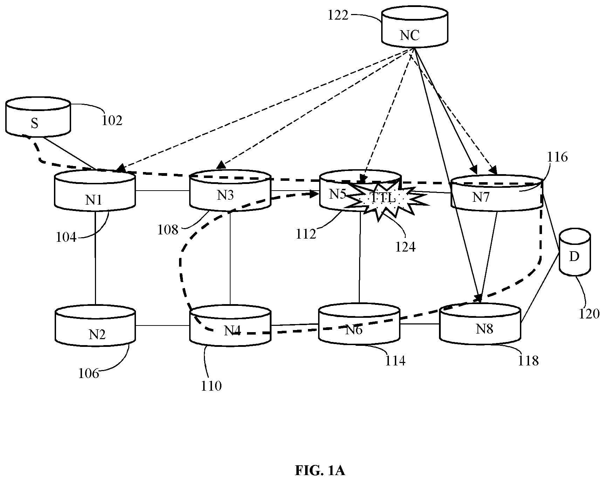

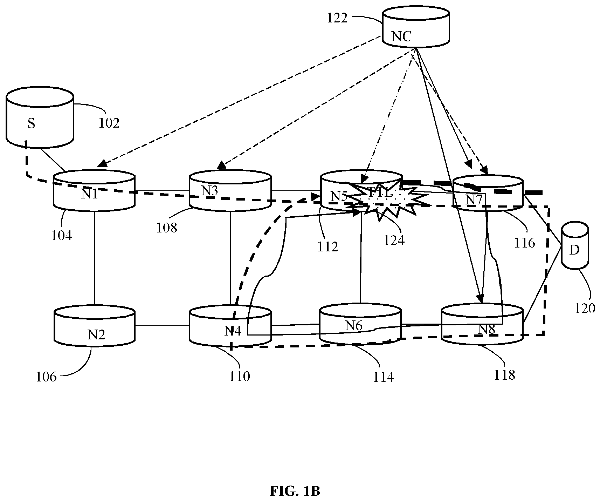

FIGS. 1A and 1B illustrate exemplary views of a typical loop detection and resolution in a network topology. The network topology of FIG. 1A and FIG.1B include a source node, "S" **102,** a node 1, N1, **104,** a node 2, N2, **106,** a node 3, N3, **108,** a node 4, N4, **110,** a node 5, N5, **112,** a node 6, N6, **114,** a node 7, N7, **116,** a node 8, N8, **118,** and a destination node "D", **120,** a Network Controller, NC, **122** and a Time-to-Live, TTL, expiration event of packets **124.**

In FIG. 1A, traffic flows from the source node **102** to the destination node **120** when packets are transmitted from the source node **102** to the destination node **120.** During transmission, the traffic enters a loop at the node N3 **108** and circulates through the nodes N3 **108,** N5 **112,** N7 **116,** N8 **118,** N6 **114,** N4 **110,** N3 **108** in a path. The traffic continually circles in the loop, and enters the node N3 108 through the same interface multiple times. The node N7 **116** or N8 **118** is assumed to be the fault point in the loop. The TTL of packets **124** at the node N5 **112** expires after the traffic has circulated within the loop multiple times. A threshold for detecting TTL-expired packets is predefined (e.g. 128 or 64) to enhance detection efficiency. The TTL of packets **124** may expire once it reaches the threshold value.

Similarly, in FIG. 1B, traffic flows from the source node **102** to the destination node **120** when the packets are transmitted from the source node **102** to the destination node **120.** During transmission, the traffic enters a loop, and circulates from the nodes N3 **108,** N5 **112,** N7 **116,** N8 **118,** N6 **114,** N4 **110,** and N3 **108.** The node N7 **116** or N8 **118** is assumed to be the fault point in the loop. The traffic flow is continuously circulated multiple times through the same interface as the traffic flow repeatedly entering the node N3 **108** through the same interface. The TTL of the node 5, N5 **112** expires after multiple circulations. This leads to an accumulation of packets with expired TTL. The number of these packets eventually reaches a threshold before it reaches zero.

Existing methods do not allow to break permanent routing loops due to routing loops. To try to prevent routing loops, measures such as setting a maximum number of hops are implemented. Additionally, the routing loops may be detected using loop detection protocols. Eliminating these routing loops often requires manual intervention, such as deleting routing entries and reconfiguring the routing protocols and policies.

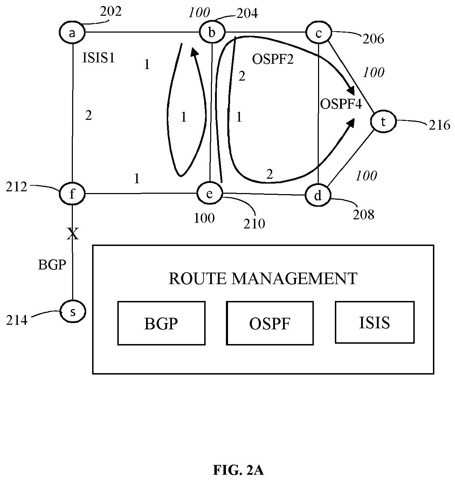

FIG. 2A illustrates a typical routing loop in a network topology for data transmission caused by misconfigurations in tuning routing parameters. The network topology includes a router a **202,** a router b **204,** a router c **206,** a router d **208,** a router e **210,** a router f **212**, a node s **214,** and a node t **216** that are connected with links with a cost of 100. The network topology utilizes Open Shortest Path First, OSPF, protocol, Intermediate System to Intermediate System, ISIS, protocol, and Border Gateway Protocol, BGP, to calculate a shortest path in the network topology to transmit packets to the node t **216.** The ISIS1 protocol instance operates between the router a **202,** the router b **204,** and the router e **210.** The OSPF2 protocol instance includes the router b **204,** the router c **206,** the router d **208,** and the router e **210.** The OSPF4 protocol instance operates between the router e **210,** the router b **204,** the router c **206,** and the node t **216.** The BGP operates between the router f **212** and the node s **214.** In this case, the BGP disconnects between the router f **212** and the node s **214.**

There are two important paths to reach the node t **216** through the routers. The router b **204** has two possible paths to reach destination node i.e. the node t **216.** For example, Path 1: b → c → t with a cost of 102, and Path 2: b → e → d → t with a cost of 101. The router e **210** has two possible paths to reach the node t **216.** For example, Path 1: e → d → t with a cost of 102. The router b **204** selects the route through the router e **210** (i.e. b → e → d → t). The router e **210** simultaneously prefers the route through the router b **204** (i.e. e → b → c → t). This creates a loop where traffic is continuously forwarded between the router b **204** and the router e **210** without reaching the node t **216.** Moreover, incorrect preferences or misconfigurations among routing protocols in the route management (e.g., BGP, OSPF, and ISIS) can cause routes to disappear or conflict, which further complicates route management and leads to loops.

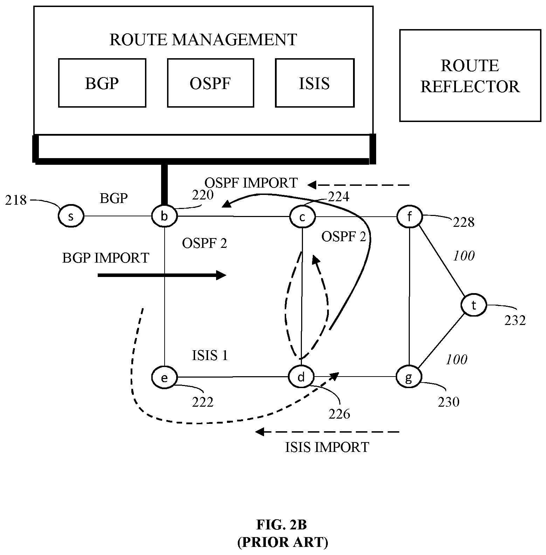

FIG. 2B illustrates managing traffic issues caused by routing misconfigurations in accordance with a prior art implementation. The network topology includes a node s **218,** a router b **220,** a router e **222,** a router c **224,** a router d **226,** a router f **228,** a router g **230,** and a node t **232.** The network topology manages routes using Border Gateway Protocol, BGP, Open Shortest Path First, OSPF, protocol, and Intermediate System to Intermediate System, ISIS protocol. The network topology includes BGP import, OSPF import, and ISIS import, for importing routing information. Route reflector is used to optimize route distribution in large networks.

In FIG. 2A, the routing issues may cause data packets to loop. This is identified using Time-to-Live, TTL, expiration. The TTL is a value in the data packets that decreases with every node. If the TTL reaches 0, the packet is discarded. The system monitors TTL expiration events, and generates alerts to notify a controller or a management system, when the TTL expires. That is, if there's a misconfiguration, traffic starts looping between the routers. This causes packet overload and TTL expiration. If the loops can overload the routers with expired packets, the system applies the Central Processing Unit, CPU protection, and automatic shaping to reduce the traffic load on the routers. If an operator manually fixes router configurations, the system of FIG. 2A utilizes verification tools to fix the configurations. Moreover, during troubleshooting, traffic cannot be protected automatically in the networks using multiple routing protocols as the operators have to fix the issue manually. As a result, the network traffic remains at risk of downtime or overload.

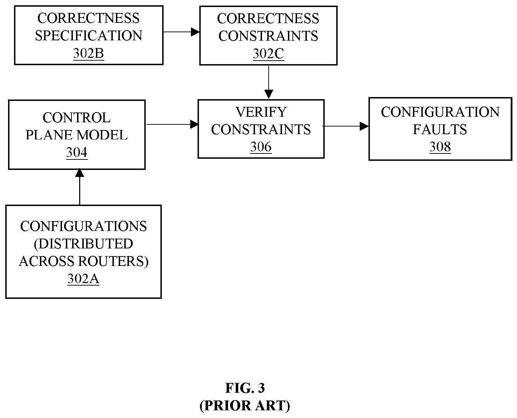

FIG. 3 illustrates a workflow of a control plane verification to detect loops in a traditional network topology in accordance with a prior art implementation. The control plane verification translates network configuration files into a logical formula that captures the stable states to which the network forwards through interactions between routing protocols such as Open Shortest Path First, OSPF, Border Gateway Protocol, BGP, and static routes. At step **302A,** each router in the traditional network topology is configured with the routing protocols, link costs, and rules (e.g. which neighbour receives route advertisements). These configurations are distributed across multiple routers. At step **302B,** expected behaviour or policies of the traditional network topology (i.e. correct behaviour or correctness specification) are defined by network operators. For example, there are no loops in routing, and all routes converge. The controller translates the expected behaviour defined by the network operators into specific configurations for the devices in the traditional network topology. At step **302C,** rules or conditions (i.e. correctness constraints) are formalized based on the correctness specification, and are used to verify the network's configurations.

At step **304,** a control plane model processes the distributed configurations and generates the network's behaviour. The network's behaviour is generated by interpreting these configurations while adhering to the Request for Comments, RFC, standards of the routing protocols. At step **306,** the correctness constraints are applied to the network's behaviour to verify whether the network operates as expected. At step **308,** if any violations or mismatches are found during verification, they are flagged as configuration faults. These faults indicate issues in the traditional network topology that need to be fixed.

Existing data plane verification methods detect loops in a traditional network topology in accordance with a prior art implementation. The data plane forwards packets based on rules and configurations established by the control plane. The data plane applies the generated configurations to devices in the data plane, and verifies that the policy is implemented correctly in the device configurations. The device configurations are verified to ensure they produce the desired forwarding behaviour in the traditional network topology.

Various existing tools have been employed for control plane verification to identify and address issues in network configurations. The tool may be Batfish^{®}, Automated Router Configuration, ARC, Minesweeper^{®}, and Ciena^{®} from Packet Design. The Battish^{®} simulates the behaviour of individual protocols to derive data plane information, and provides a comprehensive analysis of the control plane. However, it is computationally expensive, making it challenging to scale for larger or more complex networks. The ARC models specific routing protocol features, including Access Control Lists, ACLs, Equal-Cost Multi-Path, ECMP, and static routes, with support for protocols like OSPF, and BGP. Despite its utility, the ARC has a limited scope of protocol feature coverage and does not handle the full complexity of real-world routing scenarios. The Minesweeper verifies real-world networks. However, while its broad verification capabilities are impressive, it may lack in-depth analysis and tailored solutions for specific issues like routing loops. The Ciena's solution identifies problems such as sub-optimal routing metrics, flapping, loops, and black holes in the network configurations.

However, these existing tools can only detect loops and cannot break them or propose a strategy to resolve them.

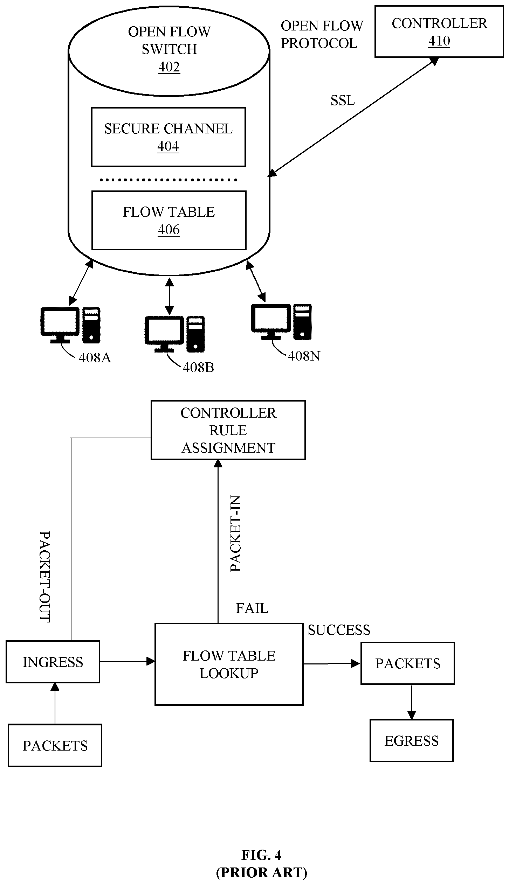

FIG. 4 illustrates Software-Defined Networking, SDN, architecture using the OpenFlow protocol for communication between controller and OpenFlow switches in accordance with a prior art implementation. The SDN architecture includes an OpenFlow switch **402** that includes a secure channel **404,** and a flow table **406,** and a controller **410.** In the SDN architecture, one or more devices **408A-N** are connected to the OpenFlow switch **402.** The flow table **406** communicates with the controller **410** through an OpenFlow protocol, storing rules for packet forwarding, including matching conditions, actions, and counters. The communication between the OpenFlow switch **402** and the SDN controller is based on the OpenFlow protocol. This communication is secured using a Secure Sockets Layer, SSL. The communication between the switch and the controller **410** occurs through the secure channel **404.** The controller **410** dynamically manages the flow table rules in the OpenFlow switch **402.** When a packet arrives that does not match an existing rule in the flow table **406,** the switch communicates with the controller **410** to receive a new rule. The traffic of the one or more devices **408A-N** is managed based on the flow table rules.

The OpenFlow switch **402** receives incoming traffic from connected devices. If a rule exists, the packet is forwarded based on the flow table entry. If no rule exists, the switch communicates with the controller **410** via the OpenFlow protocol to get new instructions (i.e., if the packets lookup fails in the flow table **406,** the SDN oriented loop detection mechanism initiates "packet-in" to controller rule assignment and "packet-out" to ingress). The controller **410** sends the appropriate rules, and updates the flow table **406.** Once the packet has been matched with the rule and processed, it exits from the OpenFlow switch **402** (i.e., if the packets lookup success in the flow table **406,** the packets are transmitted to egress).

The SDN-oriented loop detection mechanism involves identifying all switches located within a loop through statistical analysis of Time-to-Live, TTL packet values, supplemented by spectral analysis through Fourier Transform techniques. However, this approach may result in false positives. Once the switches in the loop are identified, they are instructed to clear their flow tables, allowing the entire network to re-converge. After clearing the flow table, subsequent packets will initiate "packet-in" events at the controller **410** to repopulate the flow tables for routing traffic. However, the identification of the switches is based on statistical methods, leading to potential false positives. This approach applies only to OpenFlow and is incompatible with multiple Interior Gateway protocols, IGP. Further, it involves the drastic measure of flushing entire flow tables.

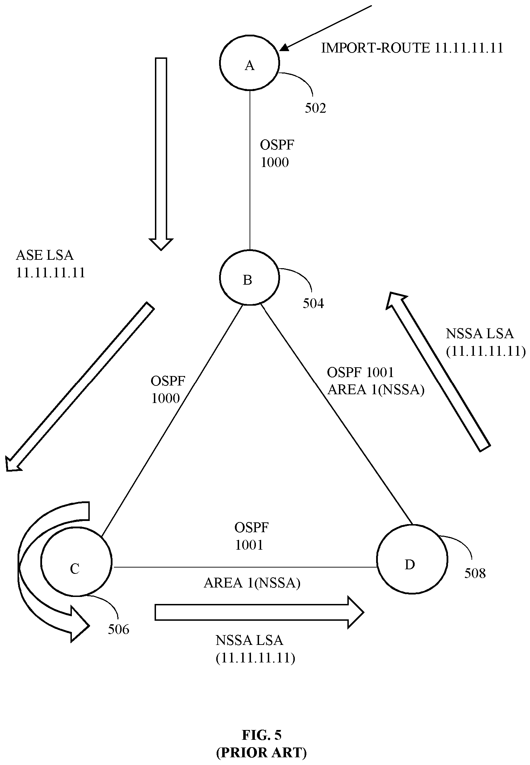

FIG. 5 illustrates a network topology where an Open Shortest Path First, OSPF, protocol is being used for routing across multiple routers in accordance with a prior art implementation. The network topology includes a router A **502,** a router B **504,** a router C **506,** and a router D **508.** The router B **504** receives two distinct paths to reach the network (11.11.11.11) of the router A **502** using the OSPF protocol. The network topology defines OSPF areas, including Area 1 (i.e. Not-So-Stubby Area, NSSA), and their associated Autonomous System External, ASE, Link State Advertisements, LSAs. The router B 504 operates in OSPF 1000 and OSPF 1001 within Area 1 (NSSA). The first route or path connects directly from the router B **504** to the router A **502** through OSPF 1000. The second route or path reaches the router A **502** through the router D **508,** the router C **506,** and the router B **504** utilizing OSPF 1001 within Area 1 (NSSA) and involving NSSA LSAs (11.11.11.11). The OSPF calculates the total cost of each path. The first path has a higher cost. The second path has the lowest cost. The OSPF always selects the lowest-cost path to add to the Routing Information Base, RIB. As a result, the path from the router B **504** to the router A **502** is removed from the RIB and is no longer used for forwarding traffic. The router B **504** now routes traffic to the router A **502** through the second path.

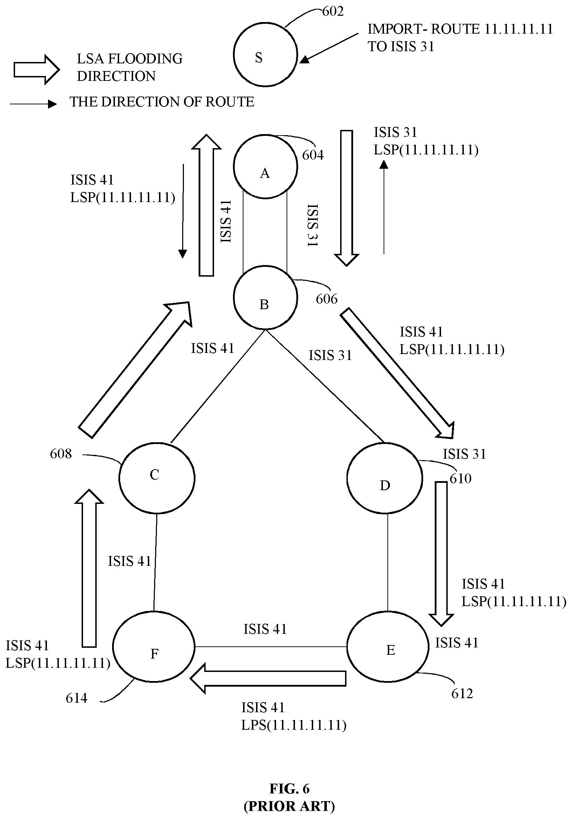

FIG. 6 illustrates a network topology that indicates misconfigurations and loop formation in accordance with a prior art implementation. The network topology includes router S **602,** a router A **604,** a router B **606,** a router C **608,** a router D **610,** a router E **612,** and a router F **614.** In the network topology, a Link State Packet, LSP, of Internet Protocol, IP, address 11.11.11.11 of each router, is propagated within Intermediate System to Intermediate System, ISIS instance 31, which induces a change in the routing instance at peers (i.e. the router D **610** and the router E **612).** When the LSP reaches the routers D **610** and E **612,** it switches to ISIS instance 41 and continuously propagates under this new instance. When the LSP is under the ISIS instance 41, the router B **606** includes two different paths to reach the router S **602.** The first route or path is through the router A **604** via ISIS instance 31, i.e. B→A→S. The second path involves the router B **606,** the router D **610,** the router E **612,** the router F **614,** the router C **608,** the router B **606,** and the router A **604** via ISIS instance 41, i.e. B→D→E→F→C→B→A→S. The first path is the shorter path. The second path is the longer path. The router B **606** prefers the ISIS instance 41 over the ISIS instance 31. This misconfiguration creates an inconsistent routing table, where the router B **606** assumes the longer path is better. Even though the shorter path exists through B → A → S, the routing preference at B causes the router to choose the longer path. This decision introduces a routing loop.

To overcome these challenges, there is a need to address the aforementioned technical problems/drawbacks in breaking a permanent loop in a data communications network.

### SUMMARY

It is an object of the disclosure to provide a method of breaking a permanent loop in a multi-protocol and multi-instance data communications network. Moreover, the disclosure also relates to a system of breaking a permanent loop in a multi-protocol and multi-instance data communications network. Further, the disclosure relates to a computer program that includes instructions for carrying out all the steps of the method, when the computer program is executed on a computer system.

This object is achieved by the features of the independent claims. Further, implementation forms are apparent from the dependent claims, the description, and the figures.

According to a first aspect, there is provided a method of breaking a permanent loop in a multi-protocol and multi-instance data communications network. The multi-protocol data and multi-instance communications network handles a plurality of protocols using a respective plurality of instances of the data communications network. The method includes detecting a permanent loop in data communications for a given destination between a plurality of routers in the multi-protocol and multi-instance data communications network. The method includes selecting a first router which is outside of the permanent loop and a second router which is inside the permanent loop, as a rerouting between these routers which will break the permanent loop. The method includes directing data communications for the given destination from the second router to the first router.

Preferably, detecting the permanent loop in the data communications is done by a first router and the selecting step is done by sending a probe to each neighbouring router of the first router, where each neighbouring router is outside of the permanent loop. Optionally, the probe is a trace/route ping.

Preferably, if the trace/route ping is successful, the neighbouring router is selected as the router which will break the permanent loop.

Preferably, selecting the first router is done by sending an alert to a route reflector router which has knowledge of configuration information regarding each of the plurality of instances and each of the plurality of protocols. The semi-distributed solution uses a Route Reflector, RR to determine the best method to break the loop. The router detects a loop, prompting the RR to locate the source of the loop. The RR identifies safe routers surrounding the loop and selects the best safe router, and sends a rerouting strategy to the affected router, aligning it with the chosen safe router.

Preferably, the route reflector changes a routing policy to reach the destination of the second router in the loop to reroute on the first router outside the loop. Preferably, the plurality of protocols includes an Open Shortest Path First, OSPF, an Intermediate System to Intermediate System, ISIS, and a Border Gateway Protocol, BGP. Preferably, detecting the permanent loop is carried out by a Time-to-Live, TTL expiration alerts.

Preferably, the route reflector router identifies all routers in the permanent loop and the relevant destination for the data communications. Optionally, the route reflector router selects the routers which will break the permanent loop by checking if the rerouting will cross the loop. Optionally, the route reflector router detects a plurality of loops for each given destination. Preferably, a set of user parameters are provided so that a user can manage which router can reroute data communications to break a loop. Preferably, a list of routing policies is provided to a user for user selection, including a recommendation score for each routing policy.

According to a second aspect, there is provided a system comprising means adapted for carrying out all the steps of the method.

According to a third aspect, there is provided a computer program comprising instructions for carrying out all the steps of the method, when the computer program is executed on a computer system.

The method, system, and computer program focus on a tactical traffic protection mechanism that breaks permanent loops in data communication for a specified destination within the multi-protocol, multi-instance network by selectively rerouting the traffic associated with the destination (i.e. prefix) where the loop is detected. The system focuses on rerouting only the traffic associated with the affected destination involved in the loop. Additionally, the system selects the most efficient rerouting strategy to reduce or avoid unnecessary network overhead caused by excessive probe traffic. The method, system, and computer program provide a distributed or semi-distributed solution to break the permanent loop in a data communications network. The distributed solution uses probes to determine which neighbouring connection is safe or not.

The semi-distributed solution uses a Route Reflector, RR to determine the best method to break the loop. The router detects a loop, prompting the RR to locate the source of the loop. The RR identifies safe routers surrounding the loop, selects the best safe router, and sends a rerouting strategy to the affected router, aligning it with the chosen safe router.

Therefore, in contradistinction to the existing solutions, the method, system, and computer program focus on rerouting only the traffic associated with the affected destination involved in the loop, selecting the most efficient rerouting strategy, and reducing unnecessary network overhead caused by excessive probe traffic.

### BRIEF DESCRIPTION OF DRAWINGS

Implementations of the disclosure will now be described, by way of example only, with reference to the accompanying drawings, in which:
- FIGS 1A and 1B: illustrate exemplary views of a typical loop detection and resolution in a network topology;
- FIG. 2A: illustrates a typical routing loop in a network topology for data transmission caused by misconfigurations in tuning routing parameters;
- FIG. 2B: illustrates managing traffic issues caused by routing misconfigurations in accordance with a prior art implementation;
- FIG. 3: illustrates a workflow of a control plane verification to detect loops in a traditional network topology in accordance with a prior art implementation;
- FIG. 4: illustrates Software-Defined Networking, SDN architecture using OpenFlow protocol for communication between controller and OpenFlow switches in accordance with a prior art implementation;
- FIG. 5: illustrates a network topology where an Open Shortest Path First, OSPF protocol is being used for routing across multiple routers in accordance with a prior art implementation;
- FIG. 6: illustrates a network topology that indicates misconfigurations and loop formation in accordance with a prior art implementation;
- FIG. 7: illustrates a block diagram of a system of breaking a permanent loop in a multi-protocol and multi-instance data communications network in accordance with an implementation of the disclosure;
- FIG. 8: illustrates a network topology that depicts rerouting network traffic using Loop-Free Alternates, LFA when a link failure occurs, in accordance with an implementation of the disclosure;
- FIG. 9A: illustrates a method of a distributed solution in a network topology in accordance with an implementation of the disclosure;
- FIG. 9B: illustrates a method of a distributed routing solution in a network topology in accordance with an implementation of the disclosure;
- FIG. 10A: illustrates an exemplary network topology with a Route Reflector, RR, in a semi-distributed solution in accordance with an implementation of the disclosure;
- FIG. 10B: illustrates each step of the Route Reflector, RR, in the semi-distributed solution in a network topology in accordance with an implementation of the disclosure;
- FIG. 11: illustrates a flow diagram of a Route Reflector, RR, for loop resolution in a semi-distributed solution in accordance with an implementation of the disclosure;
- FIG. 12: illustrates a system architecture for loop resolution in accordance with an implementation of the disclosure;
- FIG. 13: illustrates an architecture of a tactical loop protection module in accordance with an implementation of the disclosure;
- FIGS. 14A-C: are exemplary views that illustrate the transformation of adapting Dijkstra's algorithm to compute path costs based on various routing types and the inheritance rule in accordance with an implementation of the disclosure;
- FIGS. 15A-C: are network graphs that illustrate the optimization of routing paths in a network by computing an upstream path in accordance with an implementation of the disclosure;
- FIGS. 16A-C: are network graphs that illustrate the optimization of routing paths in a network by computing a downstream path in accordance with an implementation of the disclosure;
- FIG. 17: is an example sequence that illustrates a process of identifying and locating a loop within a network topology in accordance with an implementation of the disclosure;
- FIG. 18: is an example sequence that illustrates a process of identifying a loop within a network topology in accordance with an implementation of the disclosure;
- FIG. 19: illustrates a flow diagram of a method of breaking a permanent loop in a multi-protocol and multi-instance data communications network in accordance with an implementation of the disclosure; and
- FIG. 20: is an illustration of a computer system in which the various architectures and functionalities of the various previous implementations may be implemented.

### DETAILED DESCRIPTION OF THE DRAWINGS

Implementations of the disclosure provide a method of breaking a permanent loop in a multi-protocol and multi-instance data communications network. Moreover, the disclosure also relates to a system of breaking a permanent loop in a multi-protocol and multi-instance data communications network.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

### Definitions:

Route Reflector: A route reflector is a network device commonly used in Border Gateway Protocol, BGP to optimize routing within large networks, especially in an internal BGP. The route reflector improves scalability and efficiency but requires careful configuration to avoid suboptimal routing paths.

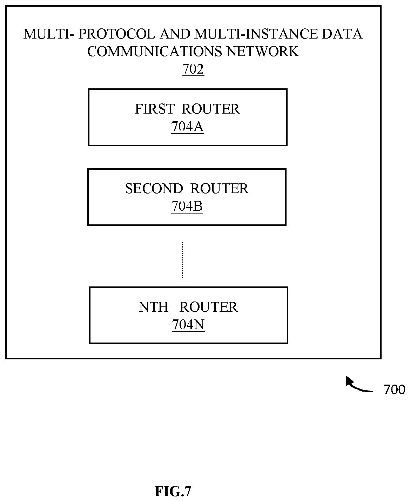

FIG. 7 illustrates a block diagram of a system **700** of breaking a permanent loop in a multi-protocol and multi-instance data communications network **702** in accordance with an implementation of the disclosure. The system **700** includes the multi-protocol and multi-instance data communications network **702,** and a plurality of routers **704A-N** including a first router **704A,** a second router **704B,** and a N^{th} router **704N.** The multi-protocol data and multi-instance data communications network **702** handles a plurality of protocols using a respective plurality of instances of the data communications network for each protocol. The system **700** detects a permanent loop in data communications for a given destination between the plurality of routers **704AN** in the multi-protocol and multi-instance data communications network **702.** The system **700** selects a first router (e.g. the first router **704A)** outside the permanent loop and a second router (e.g. the second router **704B)** inside the permanent loop. The system 700 reroutes the first router and the second router to break the permanent loop in the multi-protocol and multi-instance data communications network **702.** The system **700** directs data communications for the specified destination from the second router (e.g. the second router **704B)** to the first router (e.g. the first router **704A).**

The system **700** breaks permanent loops in data communication for a specified destination by rerouting traffic associated with the specified destination where the loop is detected. The system **700** reroutes only the traffic associated with the specified destination that is involved in the loop. Additionally, the system **700** selects the most efficient rerouting strategy to avoid and reduce unnecessary network overhead. The system **700** includes a distributed or semi-distributed solution to break the permanent loop in the data communications network. In the distributed solution, the system **700** uses probes to determine which neighbouring connections are safe to use.

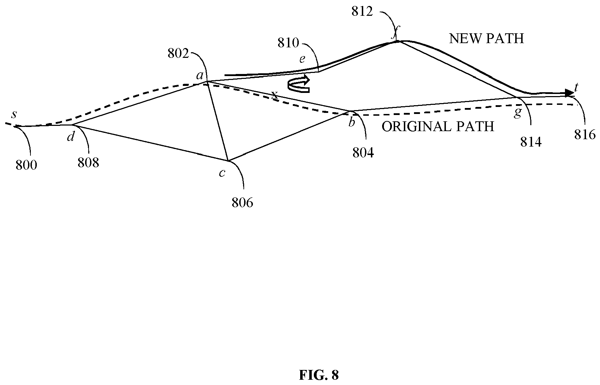

FIG. 8 illustrates a network topology that depicts rerouting network traffic using Loop-Free Alternates, LFA, when a link failure occurs, in accordance with an implementation of the disclosure. The topology includes a source point s **800,** a router a **802,** a router b **804,** a router c **806,** a router d **808,** a router e **810,** a router f **812,** a router g **814,** and an end point t **816.** These routers are connected through various links or interfaces. In the network topology, the network traffic initially flows from the source point **800** to the end point t **816** through the router d **808,** the router a **802,** the router b **804,** and the router g **814** (e.g. original path). When the router a **802** detects a failure in the original path (i.e., the link between the router a **802,** and the router b **804),** the LFA reroutes traffic to an alternative path.

In the network topology, Routing Information Base, RIB, is a table maintained by the router a **802** that stores routing entries. The table is updated dynamically when changes occur in the network topology, such as a link failure. The RIB records the changes made at the router a **802** after a failure on the interface ab. The router a **802** forwards traffic to destinations (e.g., b, g, and t) through the interface ab. The interface ab refers to the interface a to b being used to forward the traffic. When the interface ab fails, the router a **802** detects the failure and updates its routing table to use the alternate path (ae) to forward traffic. The ae is the alternate path (e.g. new path) that reroutes traffic through the alternate path to the destination i.e. a → e → f → g → t.

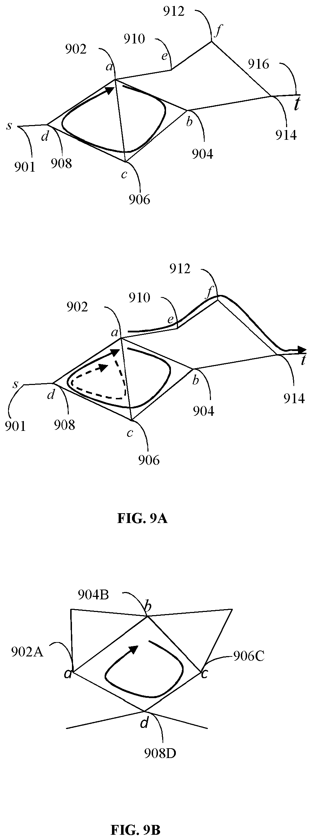

FIG. 9A illustrates a method of a distributed solution in a network topology in accordance with an implementation of the disclosure. The network topology includes a source point s **901,** a router a **902,** a router b **904,** a router c **906,** a router d **908,** a router e **910,** a router f **912,** a router g **914,** and an end point t **916.** The network topology includes two re-routing strategies by identifying the routers as either a safe router or an unsafe router. A neighbour router is considered as an unsafe router if the routing path from this neighbour router to the prefix reaches the detected loop. A neighbour router is considered as a safe router if the routing path avoids the loop. The router detects the loop by sending a traceroute or ping to reach the end point t **916** on the associated interface. If the traceroute or ping reaches the destination without encountering a loop, the neighbour router is confirmed as the safe router. If it fails due to a loop, the neighbour router is marked as an unsafe router.

For example, the router c **906** is clearly considered as unsafe for the router a **902** in reaching the end point t **916,** as the router c **906** is within the loop affecting the path. The router e **910** may be either safe or unsafe. To determine this, the router a **902** must query the router e **910** to confirm whether it is a safe neighbour to reach the end point t **916.** In response, the router e **910** will send a probe to the end point t **916** to test whether the path intersects the loop. If the probe is successful and avoids the loop, the router e **910** is classified as a safe router, and the path is classified as a safe path. Otherwise, the router e **910** is marked as an unsafe router.

FIG. 9B illustrates a method of a distributed routing solution in a network topology in accordance with an implementation of the disclosure. Each router in the network topology (made up of routers a 902A, b 904B, c 906C and d 908D) independently handles loop detection by sending a probe (i.e. a traceroute or ping) to each of its neighbouring routers when a loop is detected. The maximum number of probes needed in such a setup equals the sum of the neighbours, Σ_{*u*∈*loop*}|*N*(*u*)|, for all routers in the loop. Once the loop is detected, each router involved may alter its routing strategy to find a path that bypasses the loop. This method is fully distributed, allowing routers to operate independently without relying on a central controller.

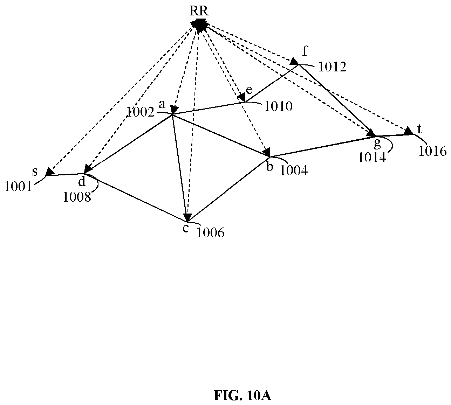

FIG. 10A illustrates an exemplary network topology with a Route Reflector, RR, in a semi-distributed solution in accordance with an implementation of the disclosure. The semi-distributed solution with the RR includes a source point s **1001,** a router a **1002,** a router b **1004,** a router c **1006,** a router d **1008,** a router e **1010,** a router f **1012,** a router g **1014,** and a destination t **1016.** The RR is connected to one or more routers from the router a **1002** to the router g **1014.** The RR is also connected to the source point **1001,** and the destination t **1016.** The RR gathers information about instances and protocol configurations via Border Gateway Protocol-Link-State, BGP-LS, a Network Configuration protocol, NETCONF, and Yet Another Next Generation, YANG, data models. The RR computes and evaluates routes from each router to a destination router to detect potential loops and ensure efficient routing.

The RR monitors routing policies and configurations across the network topology to prevent loops. Optionally, the network topology implements local routers to detect the loops quickly using Time-to-Live, TTL, expiration mechanisms, allowing the local routers to immediately discard looping packets. The combination of local and centralized loop detection maintains stable and loop-free routing in large-scale networks.

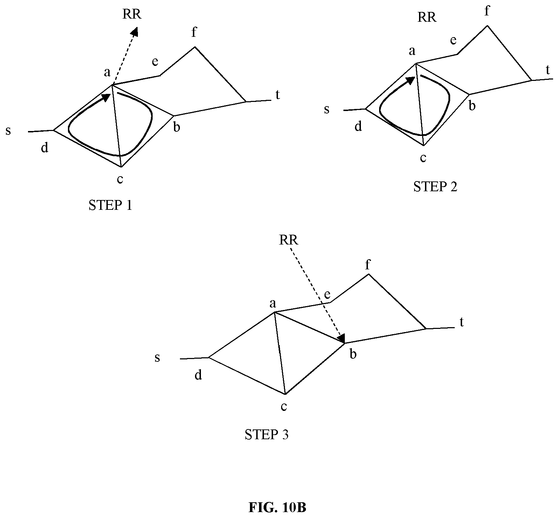

FIG. 10B illustrates each step of the Route Reflector, RR, in the semi-distributed solution in a network topology in accordance with an implementation of the disclosure. The RR in the semi-distributed solution involves three steps: (i) in step 1, a router a detects a loop and alerts the RR to select a safe next hop, (ii) in step 2, the RR selects the most optimal neighbouring router within the loop, and (iii) in step 3, the RR updates the routing policy at the selected router to redirect traffic through the preferred neighbour, breaking the loop and restoring proper traffic flow. Thereby, the RR in the semi-distributed solution results in efficient and targeted loop resolution by combining local detection with centralized coordination.

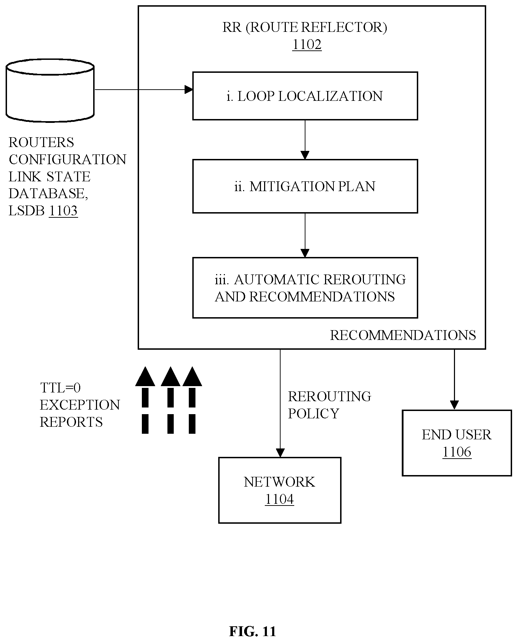

FIG. 11 illustrates a flow diagram of a Route Reflector, RR **1102** for loop resolution in a semi-distributed solution in accordance with an implementation of the disclosure. The semi-distributed solution for the loop resolution includes the RR **1102,** routers configuration Link State Database, LSDB **1103,** a network **1104,** and an end user **1106.** The routers configuration LSDB **1103** may be a collection of records that stores information of a network topology and also routing information received from other nodes. The RR **1102** utilizes the routers configuration LSDB **1103** to perform (i) loop localization to locate a loop, (ii) create a mitigation plan, and (iii) handle automatic rerouting with recommendations for loop prevention. The loop localization can be triggered by Time-to-Live, TTL, expiration alerts, timers, user requests, or modifications in router configurations. The RR **1102** receives TTL=0 exception reports to trigger the loop localization. The RR **1102** identifies nodes involved in the loop and determines the impacted destinations or prefixes when the loop detection is triggered. The loop, i.e., 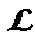 , includes all nodes, links, and related prefixes in the RR **1102.**

The mitigation plan is created for each link (u, v) such that u ∈ 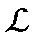 and v ∉ 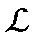 *,* to check if v is safe, i.e., traffic from v to any of the impacted prefixes does not pass through the loop. The mitigation plan ranks the safe nodes based on a metric, such as an Interior Gateway Protocol, IGP cost, selects the most optimal safe node for rerouting, and keeps other nodes for potential customer interaction.

The automatic rerouting and recommendations update the routing at node u ∈ 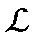 for each prefix, such that (u, v) is a link and v is the selected safe next hop, which can be achieved through network management protocols like a Network Configuration Protocol, NETCONF. Optionally, the rerouting can involve several nodes in the loop. The automatic rerouting and recommendations provide a set of other possible recommendations to fix the loop to the end user **1106.** The RR **1102** transmits a rerouting policy to the network **1104** based on the automatic rerouting and recommendations.

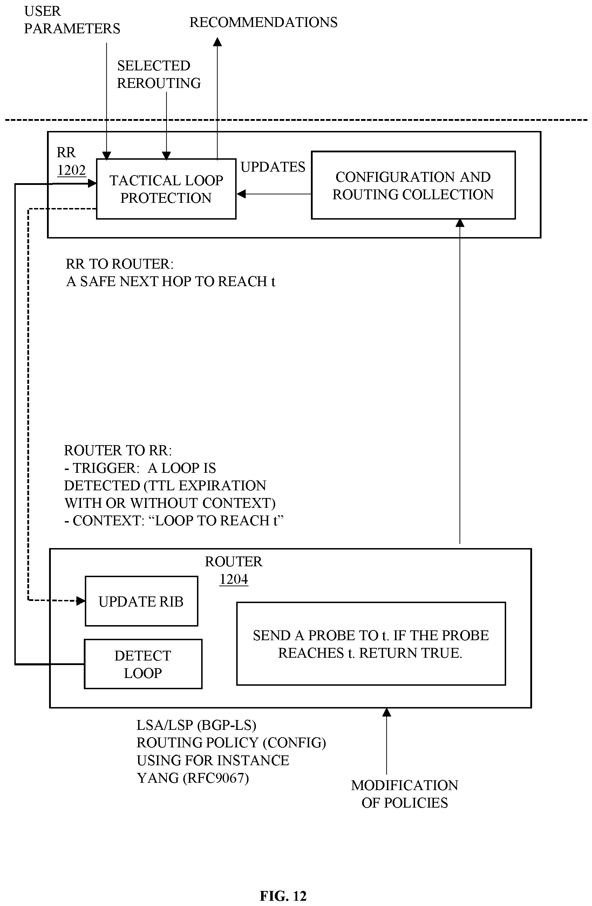

FIG. 12 illustrates a system architecture for loop resolution in accordance with an implementation of the disclosure. The system architecture includes a Route Reflector, RR, **1202,** and a router **1204.** The RR **1202** includes tactical loop protection and a configuration and routing collection. The system architecture includes user parameters and a selected rerouting as inputs to the tactical loop protection, and outputs recommendations. The user parameters represent the parametrization of the tactical loop protection of the RR **1202.** In the bottom right of FIG. 12, the router **1204** receives modification of policies where a user interacts with the RR 1202, which then configures the routers.

The user parameters for network rerouting and safe neighbour selection include (i) a blacklist of prefixes that specifies destinations where loop protection is disabled, (ii) the router preferences define where rerouting may be implemented based on a priority system or the blacklist of prefixes, determining whether a router is selected as a safe neighbour, (iii) strategies for selecting a safe neighbour using maximum link utilization, MLU, or minimizing Service Level Agreements, SLA violations, (iv) rerouting methods including Loop-Free Alternates, LFA, or Segment Routing, SR, to distribute traffic across multiple paths, (v) triggers that initiate rerouting through user requests, Time-to-Live, TTL alerts, policy updates, or periodic checks. The configuration and routing collection of the RR **1202** (i) maintain a history of routing paths, their performance metrics, and configurations used over time, (ii) track of any changes or updates to routing policies, protocols, and configurations, receive Link State Advertisement, LSA or Link State Packet, LSP (Border Gateway Protocol-Link State, BGP-LS) routing policy of the router **1204** and (iii) provide current state of routing to the tactical loop protection. A Yet Another Next Generation, YANG (Request for Comments, RFC9067) instance (i.e. YANG data model for routing policy) is used to retrieve the configuration (routing policies such as imports, preferences, etc.). The RR **1202** receives the LSA or LSP (BGP-LS) routing policy from IGP protocols like OSPF/ISIS.

The tactical loop protection determines safe routers and selects the best router for rerouting based on the user parameters and the current state of routing. The RR **1202** provides recommendations that include identified loops, re-routing strategies for the identified loops, and provides other options for rerouting, which enables the user to select and replace current re-routings as needed. For example, the user can compare the cost and availability of each alternate path to select a rerouting path. The system architecture sends routing updates from the RR **1202** to the router **1204.** When the router **1204** receives the routing updates from the RR **1202,** the router **1204** selects the safe next-hop, that leads to the destination i.e. t. The router **1204** detects whether the selected next hop is reachable and whether the path for the next hop introduces a loop or other issues using the received modification of policies from the user i.e. the router **1204** sends a probe to t. If the selected next hop is reachable and the path for the next hop does not introduce a loop or other issues, the router **1204** uses the selected next hop as safe hop i.e. if the probe reaches t, the router **1204** returns a true value. Otherwise, the router **1204** checks alternate routes. Once the safe next-hop is determined, the router **1204** updates the Routing Information Base, RIB with the next hop and the rerouting strategy. The router **1204** also sends a message to the RR **1202** when a loop is detected. The router **1204** triggers that the loop is detected based on TTL expiration with or without context. The context may include "loop to reach t".

Optionally, the RR **1202** includes partial information about the network and requires neighbours to send probes to test safety. The RR **1202** requests the router **1204** if it is safe to reach a specific prefix and receives response information confirming that the safe router reached the prefix.

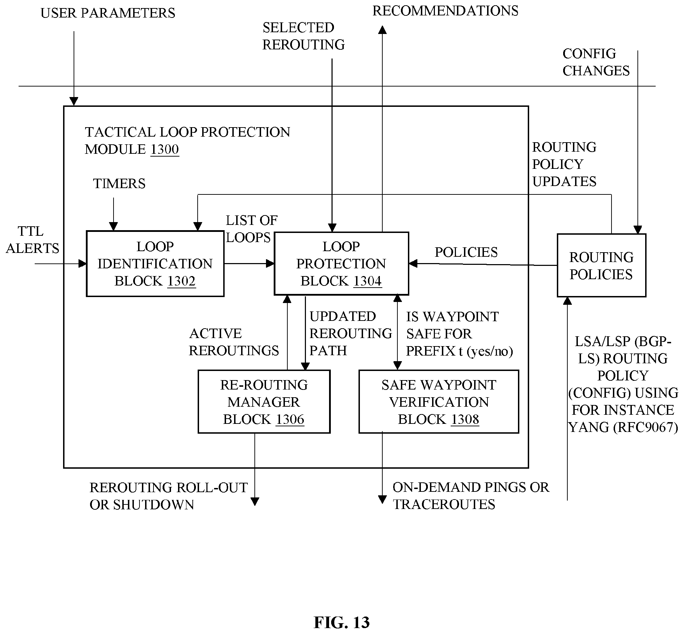

FIG. 13 illustrates an architecture of a tactical loop protection module **1300** in accordance with an implementation of the disclosure. The tactical loop protection module **1300** includes a loop identification block **1302,** a loop protection block **1304,** a rerouting manager block **1306,** and a safe waypoint verification block **1308.** The tactical loop protection module **1300** receives user parameters through a user device. The user parameters may include a blacklist of prefixes, a preference for routers, a strategy for safe neighbour selection, rerouting methods, and triggers.

The blacklist of prefixes is a list that includes specific prefixes or ranges of Internet Protocol, IP, addresses where loop protection mechanisms are disabled. If the specific prefix is included in the blacklist, the tactical loop protection module **1300** does not apply the loop protection mechanisms for traffic associated with the specific prefixes (i.e. traffic that falls under the blacklist of prefixes can bypass the usual checks and safeguards to prevent routing loops).

The preference for routers indicates (i) which routers are preferred for rerouting traffic when necessary, and (ii) which routers are considered as safe neighbours. The tactical loop protection module **1300** utilizes the preference for routers parameter to select routers based on predefined priorities or to avoid specific routers listed on the blacklist. Preferably, the tactical loop protection module **1300** utilizes the preference for routers parameter to determine which routers are considered as safe neighbours based on the predefined priorities and the blacklist.

The strategy for safe neighbour selection is a criterion to select reliable routers for routing that have not violated their Service Level Agreements, SLA. The tactical loop protection module **1300** assesses the reliability of the routers by calculating violations of the Minimum Reliability Unit, MRU, which tracks the overall performance and compliance of routers with their SLAs over time.

Rerouting defines methodologies for rerouting traffic, including Loop-Free Alternates, LFA, or Segment Routing, SR. The triggers are events that prompt the tactical loop protection module **1300** to take actions. The triggers include user requests, i.e. actions initiated by users, such as (i) routing changes, (ii) Time-to-Live, TTL alerts, (iii) routing policy updates, and (iv) regular periodic checks. The routing policy updates can be based on configuration changes and Link State Advertisement, LSA or Link State Packet, LSP (Border Gateway Protocol-Link State, BGP-LS), routing policies retrieved using a Yet Another Next Generation, YANG (Request for Comments, RFC9067) instance (i.e. YANG data model for routing policy).

The loop identification block **1302** performs a loop identification process to identify routing loops in a network topology that can cause issues when packets are transmitted from a source to a destination. The loop identification block **1302** performs the loop identification process by triggering timers, TTL alerts, and routing policy updates. The tactical loop protection module **1300** monitors the routes of packets before transmitting the packets to a receiver. If a route has not been updated within a specified time frame, the loop identification block **1302** may indicate a loop condition. The loop identification block **1302** monitors TTL values to identify when the packets are circulating longer than expected, indicating the loop condition. If the TTL value of the packet reaches a threshold without being delivered to the receiver, the loop identification block **1302** indicates that the packet is in the loop condition. The loop identification block **1302** indicates a loop condition when the packet deviates from rules in the routing policy updates. The loop identification block **1302** transmits a list of loops to the loop protection block **1304.**

The loop protection block **1304** processes each loop in the list to identify and determine rerouting paths (i.e. where and how rerouting needs to occur) for packet transmission based on the routing policy updates. The rerouting path may include safe rerouting paths (i.e. updated paths for the packet transmission). The loop protection block **1304** utilizes the safe waypoint verification block **1308** to verify whether each waypoint (i.e. intermediate router) in the rerouting paths is safe for a specific prefix associated with the packet i.e. whether waypoint safe for prefix t (destination).

Based on the verification result, the loop protection block **1304** determines whether to use the identified rerouting path or alter the identified rerouting path. For example, if the safe waypoint verification block **1308** responds with "yes" to the loop protection block **1304,** the safe waypoint verification block **1308** confirms that the waypoint in the identified rerouting path is safe and can be used. If the safe waypoint verification block **1308** responds with "no" to the loop protection block **1304,** the loop protection block **1304** selects an alternative rerouting path to avoid issues.

The loop protection block **1304** may initiate diagnostic actions, such as pings or traceroutes, to verify the effectiveness of the rerouted paths through the safe waypoint verification block **1308.** The diagnostic actions check network connectivity, performance, and absence of loops. The loop protection block **1304** provides the updated path or safe rerouting path to the rerouting manager block **1306.** The rerouting manager block **1306** implements the rerouting paths for packet transmission in the network topology.

The rerouting manager block **1306** monitors all active rerouting paths selected by the loop protection block **1304** and sends a status of all active rerouting paths to the loop protection block **1304.** The loop protection block **1304** verifies whether each waypoint (i.e. intermediate router) in all active rerouting paths is safe for a specific prefix associated with the packet using the safe waypoint verification block **1308.** Based on feedback from the loop protection block **1304,** the rerouting manager block **1306** controls whether to start or end the rerouting path. For example, if a rerouted path is no longer needed or safe, the rerouting manager block **1306** may remove or disable the rerouted path accordingly. The rerouting manager block **1306** outputs rerouting roll out or shut down commands, by analysing whether the rerouted path is safe, unsafe or no longer needed.

Optionally, the loop protection block **1304** displays recommendations from the tactical loop protection module **1300** to the user device associated with the user. The recommendations include the identified list of loops, the selected rerouting paths, and other available options for rerouting paths. The tactical loop protection module **1300** enables the user to adjust the selected rerouting paths.

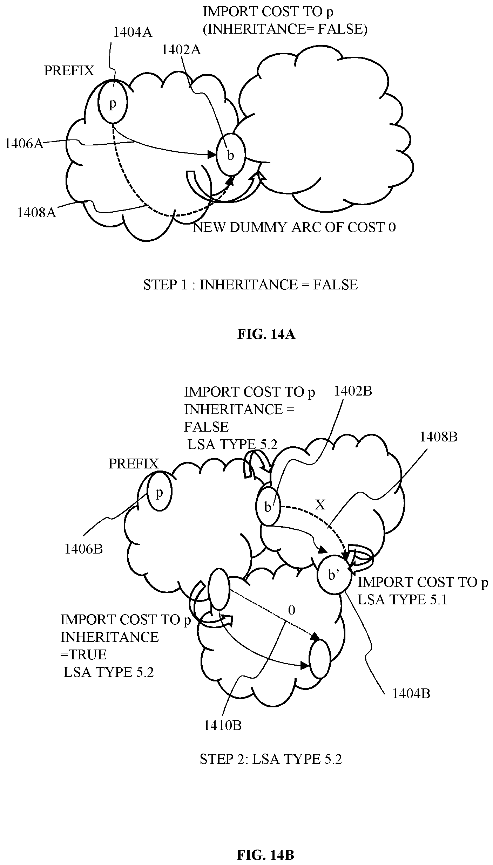

FIGS. 14A-C are exemplary views that illustrate the transformation of adapting Dijkstra's algorithm to compute path costs based on various routing types and the inheritance rule in accordance with an implementation of the disclosure. In step 1, a border router b **1402A** has an import cost to prefix p **1404A,** with a rule that inheritance is false. As shown in FIG. 14A, the border router b **1402A** in a network with a path **1406A** leads to the prefix p **1404A.** The system checks whether the prefix p **1404A** can reach the border router b **1402A** along the path **1406A.** If reachable, a new dummy arc **1408A** with a cost of 0 is added between the prefix p **1404A** and the border router b **1402A,** indicating that the inheritance is set to false. A new dummy arc **1408A,** with a cost of 0, represents the absence of inheritance without affecting the total path cost.

In step 2, two border routers b **1402B** and b' **1404B** have import costs to a prefix p **1406B** but come from different instances, represented using Link State Advertisement, LSA Type 5.2. As shown in FIG. 14B, if the inheritance is false, a cost between the border routers b **1402B** and the b' **1404B** is X which is depicted at **1408B** with import cost to prefix p LSA Type 5.1. X is the import cost from the border router b **1402B** to the prefix p **1406B.** If the inheritance is true with import cost to prefix p LSA Type 5.2, the cost between the border routers b **1402B** and the b' **1404B** is 0 which is depicted at **1410B.** This implies that when inheritance is true, the cost is effectively removed, indicating a direct or inherited route between these two routers without any additional cost.

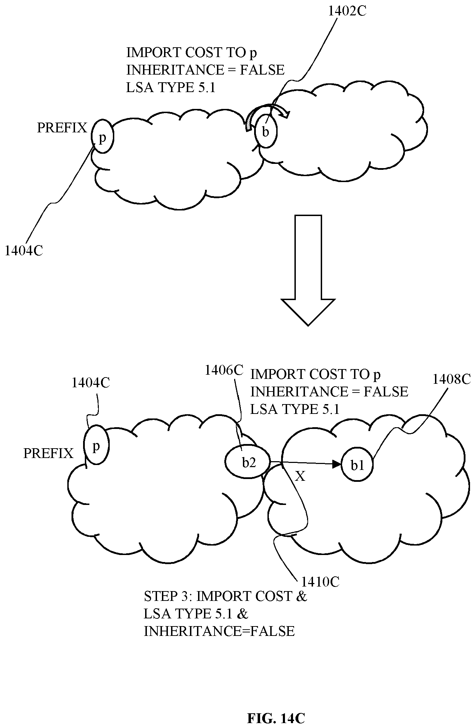

In step 3, the import cost between two instances is represented using LSA Type 5.1 and the inheritance is false. FIG. 14C shows that border routers b **1402C** split into b1 **1406C** and b2 **1408C.** One router represents the original router, while the other router represents the import connection. The border routers b1 **1406C** and b2 **1408C** are connected by an arc with cost X **1410C.** The cost X **1410C** is the import cost between the two instances. This transformation splits the routing logic to show the import cost as a separate entity while maintaining the correct cost calculation for the Dijkstra algorithm.

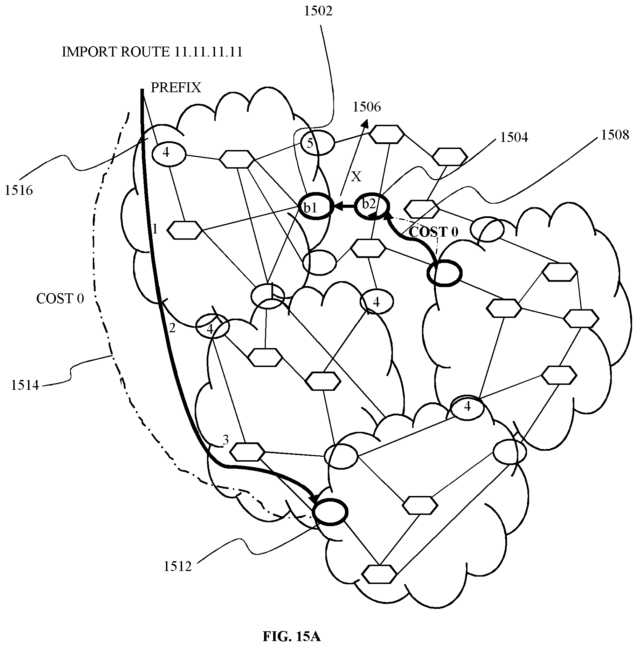

FIGS. 15A-C are network graphs that illustrate the optimization of routing paths in a network by computing an upstream path in accordance with an implementation of the disclosure. The network with an import route 11.11.11.11. In step 1, the network graph is transformed by pre-processing the structure of each Border Router, BR, to obtain a reversed graph. For each border router with Link State Advertisement, LSA type 5.1 and inheritance set to false, the structure of each border router is preprocessed by splitting each border router into b1 **1502** and b2 **1504** and connecting the b1 or BR1 **1502** and b2 or BR2 **1504** with an arc of cost X **1506** as shown in FIG. 15A.

For each border router b with inheritance set to false, the shortest path **1516** from an Internet Protocol, IP, prefix to BR' **1512** is computed. If the shortest path **1516** exists, a shortcut arc **1514** with a cost of 0 is added from the IP prefix to BR' **1512.**

For any border router b that imports the IP prefix, if the inheritance is set to false for a path between instances t and t', an arc with a cost x is added between border routers b2 and b1. If inheritance is set to true for the border router b, an arc between border routers b2 and b1 is added with cost 0.

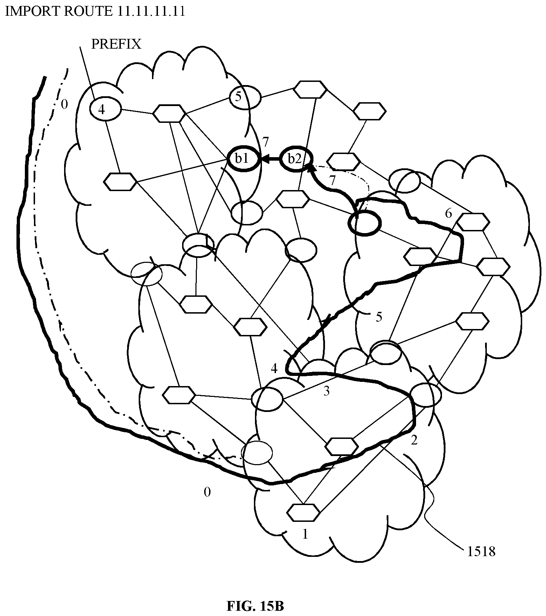

In step 2, the shortest path (i.e., upstream path) **1518,** as shown in FIG. 15B, is computed in the reversed graph from the IP prefix to the b2.

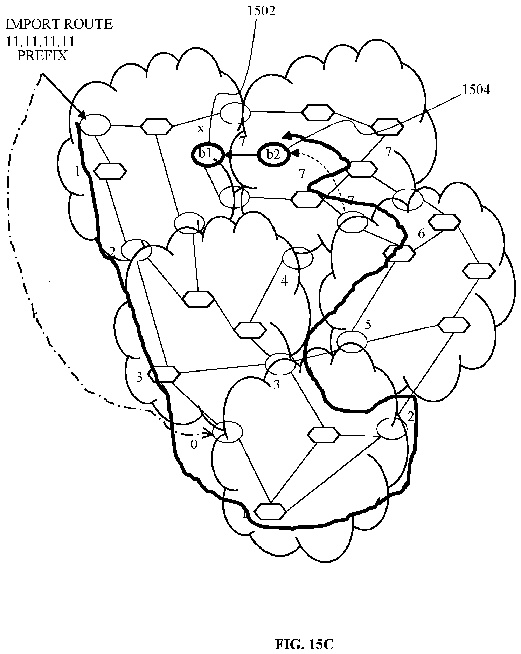

In step 3, the network graph is postprocessed, as shown in FIG. 15C, by (i) replacing dummy arcs (i.e. temporary arcs added for pre-processing) with the associated shortest path (i.e. upstream path) **1518** identified in the step 2, and (ii) updating distances of the shortest path (i.e. upstream path) **1518** in the network graph using Dijkstra's algorithm.

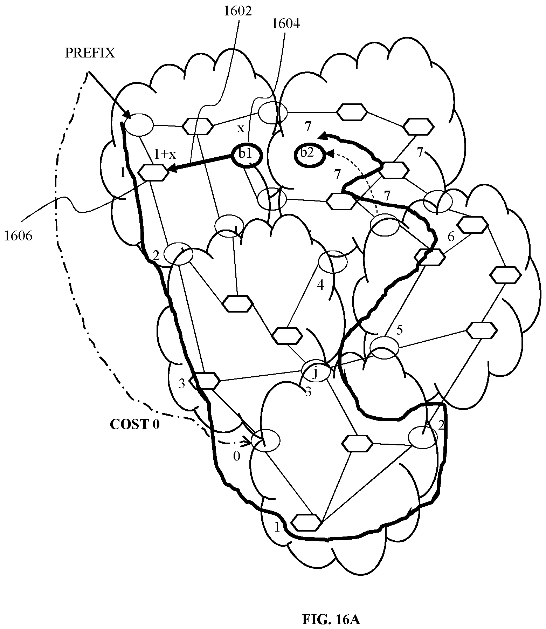

FIGS. 16A-C are network graphs that illustrate the optimization of routing paths in a network by computing a downstream path in accordance with an implementation of the disclosure. For each upstream path, UP, the system computes the corresponding downstream paths in the network graph. For each node u in the upstream path UP, the system computes the shortest path **1602** in the reversed graph from Border Router, b1 **1604** to a node u **1606.** The system checks if the Routing Information Base, RIB, at the node u, is updated, which could induce a loop.

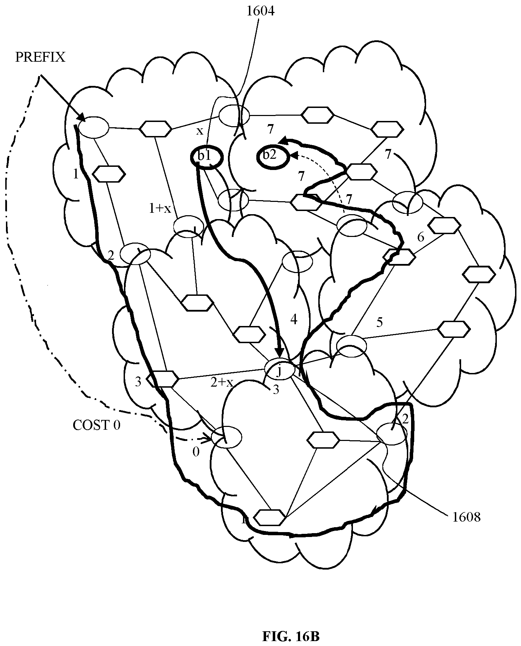

For example, as shown in FIG. 16A, if the import cost X=1 and because 2 is not less than 1, therefore, no loop occurs, and the downstream path does not change the RIB (1 + x is on the downstream path and the purpose is to show the downstream path on the node shared by the two paths). For example, as shown in FIG. 16B, if the import cost X= 1 and because 3 is less than 4, the RIB of a router j **1608** is updated twice (1+x, 2+x), indicating the presence of a loop.

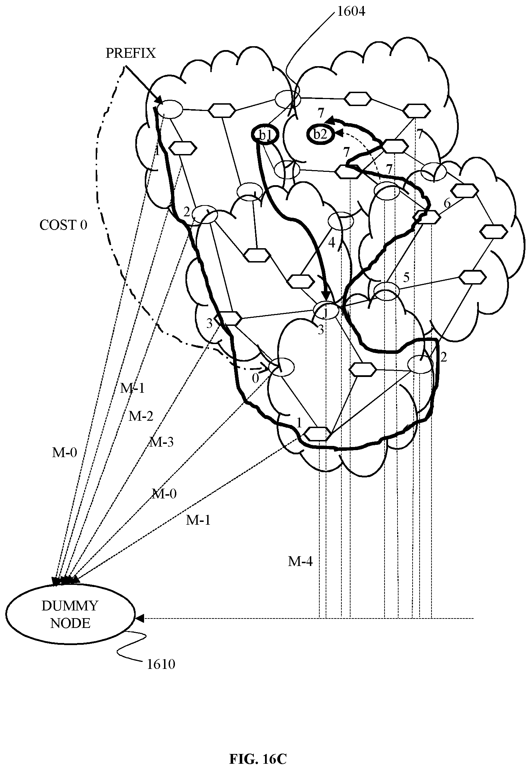

The downstream path is computed by inserting a dummy node **1610,** as shown in FIG. 16C, and connecting all routers in the upstream path (excluding the border router) to the dummy node **1610.** The system utilizes a shortest path algorithm (e.g. Dijkstra algorithm) to find the shortest path from node b1 to the dummy node **1610.** While calculating the shortest path, the system minimizes the cost of the downstream path by considering a distance from a router j **1608** (for example) to an Internet Protocol, IP, prefix on the upstream path. If the cost is less than M, a loop is detected, where M is the maximum distance from any router in the upstream path to the IP prefix. The system utilizes the adapted Dijkstra algorithm to find all downstream paths and detect any loops induced by the given border router and IP prefix.

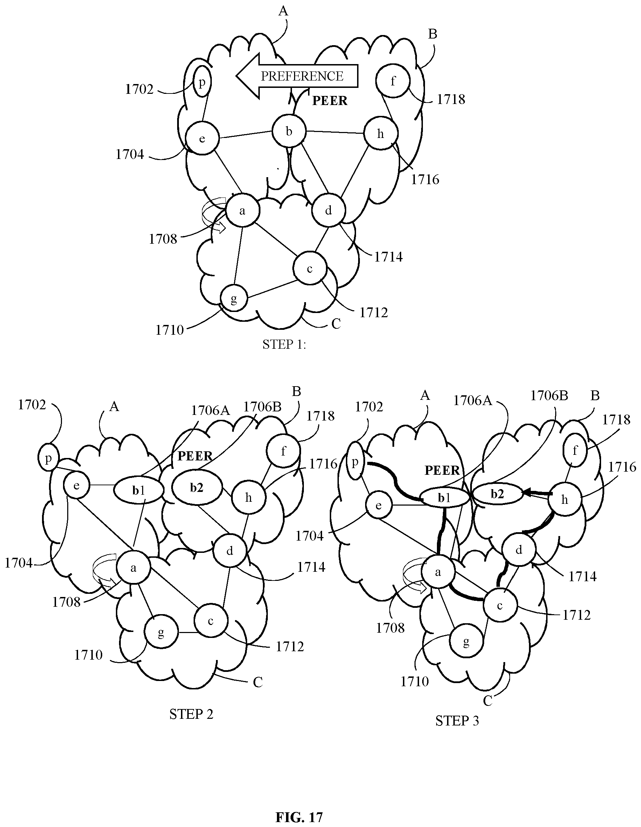

FIG. 17 is an example sequence that illustrates a process of identifying and locating a loop within a network topology in accordance with an implementation of the disclosure. At step 1, the network topology includes instance **A,** instance **B,** and instance **C,** a prefix p **1702,** a router e **1704,** a router b **1706,** a router a **1708,** a router g **1710,** a router c **1712,** a router d **1714,** a router h **1716,** and a router f **1718.** The router b **1706** is configured with a peer connection between two instances A and B, where a preference is considered between at least two instances **A** and **B.** For example, the router b **1706** is known as a border router, BR. The BR router prefers instance **B** over instance **A.**

At step 2, the network topology includes instance **A,** instance **B,** and instance **C,** a prefix p **1702,** a router e **1704,** a router b1 **1706A** and a router b2 **1706B,** a router a **1708,** a router g **1710,** a router c **1712,** a router d **1714,** a router h **1716,** and a router f **1718.** The router b **1706** is split into two virtual nodes: the router b1 **1706A** at the instance **A** and the router b2 **1706B** at instance **B.** Each virtual node represents a different instance of the BR, which allows the system to handle separate routing preferences for the instance A and the instance B, preventing confusion between paths associated with each instance.

At step 3, the shortest path from the prefix p **1702** to the router b2 associated with the instance **B** is computed in the reversed graph. If this path crosses the BR associated with the instance **A,** a loop is located between the router b1 **1706A** and the router b2 **1706B.**

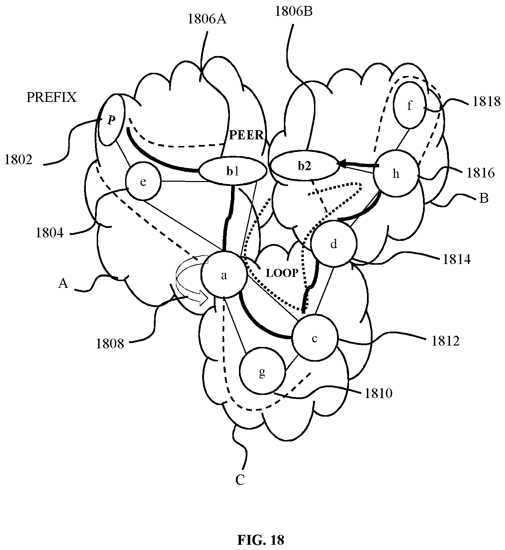

FIG. 18 is an example sequence that illustrates a process of identifying a loop within a network topology in accordance with an implementation of the disclosure. The network topology includes instance **A,** instance **B,** and instance **C,** a prefix p **1802,** a router e **1804,** a router b1 **1806A,** and a router b2 **1806B,** a router a **1808,** a router g **1810,** a router c **1812,** a router d **1814,** a router h **1816,** and a router f **1818.** A loop is identified within the network topology, which includes three steps.

At step 1, the safety of each neighbour is determined by checking whether the shortest path to the prefix p **1802** crosses the loop. If the shortest path crosses the loop, then the path is considered unsafe. If the shortest path does not cross the loop, then the path is considered safe. The example sequence, as depicted in FIG. 18, determines that a router is safe by assessing paths that avoid any routing loops. The path from the router h **1816** to the router f **1818** is unsafe because the path to the prefix p **1802** crosses the loop. The path from the router c **1812** to the router g **1810,** and the path from the router a **1808** to the router g **1810,** are unsafe because the path to the prefix p **1802** crosses the loop. The path from the router b1 **1806A** to the router d **1814** is unsafe because the router d **1814** is within the loop. The path from the router a **1808** to the router e **1804** is safe because the path to the prefix p **1802** does not cross the loop. The path from the router b1 **1806A** to the router e **1804** is safe because the path to the prefix p **1802** does not cross the loop.

At step 2, the loop is broken by automatically selecting the best node. The node is selected based on previously computed paths that locate the loop between the router b1 **1806A** associated with the instance **A** and the router b2 **1806B** associated with the instance **B.** Optionally, the node is selected based on a Routing Information Base, RIB, that is updated twice. After each update, the next hop towards the prefix p **1802** should be selected from the RIB.

At step 3, the node is selected by an arc b → e is chosen as the best solution. This arc belongs to the shortest path between the prefix p **1802** and the router b1 **1806A,** ensuring that the traffic is rerouted along a valid, non-looping path. Optionally, an arc a → e is used to break the loop. The loop is breached by an Interior Gateway Protocol, IGP, cost to reach the prefix p **1802.**

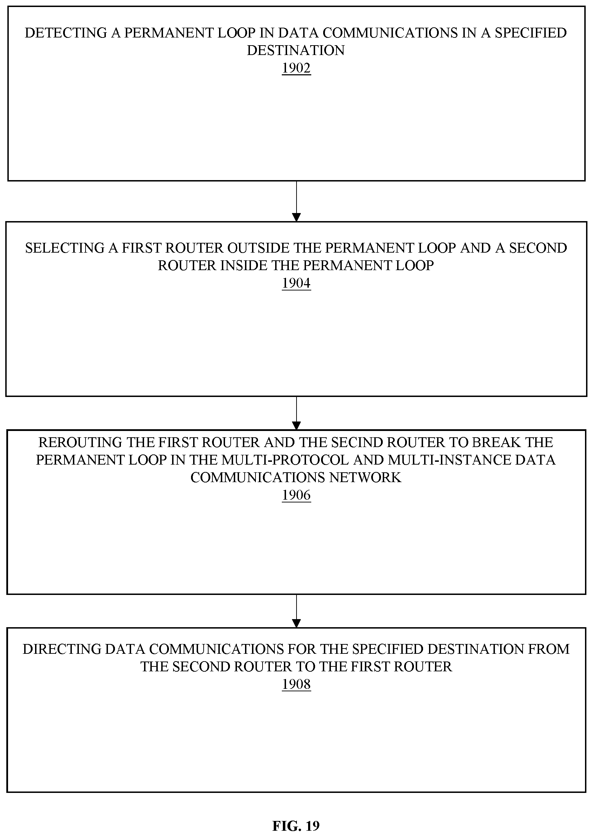

FIG. 19 illustrates a flow diagram of a method of breaking a permanent loop in a multi-protocol and multi-instance data communications network in accordance with an implementation of the disclosure. The multi-protocol data and multi-instance data communications network handles a plurality of protocols which is done by using a respective plurality of instances of the data communications network for each protocol. At a step **1902,** the method includes detecting a permanent loop in data communications in a specified destination. The specified destination is between a plurality of routers in the multi-protocol and multi-instance data communications network. At a step **1904,** the method includes selecting a first router outside the permanent loop, and a second router inside the permanent loop. At a step **1906,** the method includes rerouting the first router and the second router to break the permanent loop in the multi-protocol and multi-instance data communications network. At a step **1908,** the method includes directing data communications for the specified destination from the second router to the first router.

This method breaks permanent loops in data communication for a specified destination by rerouting the traffic associated with the specified destination where the loop is detected. This method reroutes only the traffic associated with the specified destination involved in the loop. Additionally, this method selects the most efficient rerouting strategy to avoid and reduce unnecessary network overhead. The method includes a distributed or semi-distributed solution to break the permanent loop in the data communications network. In the distributed solution, this method uses probes to determine which neighbouring connections are safe to use.

In an aspect, there is provided a computer program comprising instructions for carrying out all the steps of the method, when the computer program is executed on a computer system.

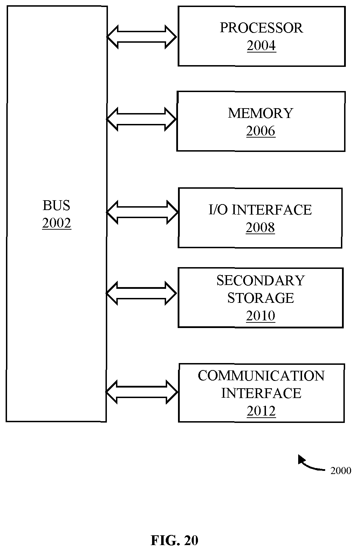

FIG. 20 is an illustration of a computer system in which the various architectures and functionalities of the various previous implementations may be implemented. As shown, the computer system **2000** includes at least one processor **2004** that is connected to a bus **2002,** wherein the computer system **2000** may be implemented using any suitable protocol, such as PCI (Peripheral Component Interconnect), PCI-Express, AGP (Accelerated Graphics Port), Hyper Transport, or any other bus or point-to-point communication protocol(s). The computer system **2000** also includes a memory **2006.**

Control logic (software) and data are stored in the memory **2006** which may take a form of random-access memory (RAM). In the disclosure, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation and make substantial improvements over utilizing a conventional central processing unit (CPU) and bus implementation. Of course, the various modules may also be situated separately or in various combinations of semiconductor platforms per the desires of the user.

The computer system **2000** may also include a secondary storage **2010.** The secondary storage **2010** includes, for example, a hard disk drive and a removable storage drive, representing a floppy disk drive, a magnetic tape drive, a compact disk drive, a digital versatile disk (DVD) drive, recording device, universal serial bus (USB) flash memory. The removable storage drives at least one of the reads from and writes to a removable storage unit in a well-known manner.

Computer programs, or computer control logic algorithms, may be stored in at least one of the memory **2006** and the secondary storage **2010.** Such computer programs, when executed, enable the computer system **2000** to perform various functions as described in the foregoing. The memory **2006,** the secondary storage **2010,** and any other storage are possible examples of computer-readable media.

In an implementation, the architectures and functionalities depicted in the various previous figures may be implemented in the context of the processor **2004,** a graphics processor coupled to a communication interface **2012,** an integrated circuit (not shown) that is capable of at least a portion of the capabilities of both the processor **2004** and a graphics processor, a chipset (namely, a group of integrated circuits designed to work and sold as a unit for performing related functions, and so forth).

Furthermore, the architectures and functionalities depicted in the various previous-described figures may be implemented in the context of a general computer system, a circuit board system, a game console system dedicated for entertainment purposes, an application-specific system. For example, the computer system **2000** may take the form of a desktop computer, a laptop computer, a server, a workstation, a game console, an embedded system.

Furthermore, the computer system **2000** may take the form of various other devices including, but not limited to a personal digital assistant (PDA) device, a mobile phone device, a smart phone, a television, and so forth. Additionally, although not shown, the computer system **2000** may be coupled to a network (for example, a telecommunications network, a local area network (LAN), a wireless network, a wide area network (WAN) such as the Internet, a peer-to-peer network, a cable network, or the like) for communication purposes through an I/O interface **2008.**

It should be understood that the arrangement of components illustrated in the figures described is exemplary and that another arrangement may be possible. It should also be understood that the various system components (and means) defined by the claims described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components is implemented at least partially as an electronic hardware component, and therefore constitutes a machine, the other components may be implemented in software that when included in an execution environment constitutes a machine, hardware, or a combination of software and hardware.

Although the disclosure and its advantages have been described in detail, it should be understood that various changes, substitutions, and alterations can be made herein without departing from the spirit and scope of the disclosure as defined by the appended claims.

## Claims

1. A method of breaking a permanent loop in a multi-protocol and multi-instance data communications network (702), where the multi-protocol data and multi-instance communications network handles a plurality of protocols using a respective plurality of instances of the data communications network, the method comprising steps of:
(a) detecting a permanent loop in data communications for a given destination between a plurality of routers (704A-N) in the multi-protocol and multi-instance data communications network;
(b) selecting a first router which is outside of the permanent loop and a second router which is inside the permanent loop, as a rerouting between these routers which will break the permanent loop; and
(c) directing data communications for the given destination from the second router to the first router.

2. The method of claim 1, wherein the detecting step (a) is done by a first router wherein the permanent loop includes the first router, and the selecting step (b) is done by sending a probe to each neighbouring router of the first router, where each neighbouring router is outside of the permanent loop.

3. The method of claim 2, wherein the probe is a trace/route ping.

4. The method of claim 3, wherein if the trace/route ping is successful the neighbouring router is selected as the router which will break the permanent loop.

5. The method of claim 1, wherein the selecting step is done by sending an alert to a route reflector router which has knowledge of configuration information regarding each of the plurality of instances and each of the plurality of protocols.

6. The method of claim 5, wherein the route reflector changes a routing policy to reach the destination of the second router in the loop to reroute on the first router outside the loop.

7. The method of any preceding claim, wherein the plurality of protocols includes OSPF, ISIS, and BGP.

8. The method of claim 1, wherein the detecting step is carried out by TTL expiration alerts.

9. The method of claim 5, wherein the route reflector router identifies all routers in the permanent loop and the relevant destination for the data communications.

10. The method of claim 5, wherein the route reflector router selects the routers which will break the permanent loop by checking if the rerouting will cross the loop.

11. The method of claim 5, wherein the route reflector router detects a plurality of loops for each given destination.

12. The method of claim 1, wherein a set of user parameters are provided so that a user can manage which router can reroute data communications to break a loop.

13. The method. of claim 1, wherein a list of routing policies is provided to a user for user selection, including a recommendation score for each routing policy.

14. A system (700) comprising means adapted for carrying out all the steps of the method according to any preceding method claim.

15. A computer program comprising instructions for carrying out all the steps of the method according to any preceding method claim, when said computer program is executed on a computer system.

## Amended claims

### Amended claims in accordance with Rule 137(2) EPC.

1. A method of breaking a permanent loop in a multi-protocol and multi-instance data communications network (702), where the multi-protocol data and multi-instance communications network (702) handles a plurality of protocols using a respective plurality of instances of the data communications network, wherein an instance of the data communication network is a subnetwork managed by a protocol, the method comprising steps of:
detecting a permanent loop in data communications for a given destination between a plurality of routers (704A-N) in the multi-protocol and multi-instance data communications network;
selecting a first router which is outside of the permanent loop and a second router which is inside the permanent loop, as a rerouting between these routers which will break the permanent loop; and
directing data communications for the given destination from the second router to the first router,
wherein a set of user parameters are provided so that a user can manage which router can reroute data communications to break a loop.

2. The method of claim 1, wherein the selecting step is done by sending an alert to a route reflector router which has knowledge of configuration information regarding each of the plurality of instances and each of the plurality of protocols.

3. The method of claim 2, wherein the route reflector changes a routing policy to reach the destination of the second router in the loop to reroute on the first router outside the loop.

4. The method of any one of the preceding claims, wherein the plurality of protocols includes Open Shortest Path First, OSPF, Intermediate System to Intermediate System, ISIS, and Border Gateway Protocol, BGP.

5. The method of claim 1, wherein the detecting step is carried out by Time-to-Live, TTL, expiration alerts.

6. The method of claim 2, wherein the route reflector router identifies all routers in the permanent loop and the relevant destination for the data communications.

7. The method of claim 2, wherein the route reflector router detects a plurality of loops for each given destination.

8. The method. of claim 1, wherein a list of routing policies is provided to a user for user selection, including a recommendation score for each routing policy.

9. A system (700) comprising means adapted for carrying out all the steps of the method according to any one of the preceding claims.

10. A method of breaking a permanent loop in a multi-protocol and multi-instance data communications network (702), where the multi-protocol data and multi-instance communications network (702) handles a plurality of protocols using a respective plurality of instances of the data communications network, wherein an instance of the data communication network is a subnetwork managed by a protocol, the method comprising steps of:
detecting, by a first router, a permanent loop in data communications for a given destination between a plurality of routers (704A-N) in the multi-protocol and multi-instance data communications network, wherein the permanent loop includes the first router;
sending, by the first router, a probe to each neighbouring router of the first router, where each neighbouring router is outside of the permanent loop, wherein the probe is a trace/route ping;
if the trace/route ping is successful, selecting, by a first router, the neighbouring router as the router which will break the permanent loop, and
directing data communications for the given destination from the first router to the neighbouring router.

11. A computer program comprising instructions for carrying out all the steps of the method according to any one of claims 1 to 8 and 10, when said computer program is executed on a computer system.

12. A first router comprising means adapted for carrying out all the steps of the method according to claim 10.
